Europäisches Patentamt

**European Patent Office**

**Office européen des brevets**

(19)

(11) Publication number: **0 138 360**
**A2**

(12) **EUROPEAN PATENT APPLICATION**

(21) Application number: **84306047.6**

(22) Date of filing: **04.09.84**

(51) Int. Cl.⁴: **F 16 C 29/06**

(30) Priority: **14.10.83 JP 190645/83**

(43) Date of publication of application: **24.04.85**
**Bulletin 85/17**

(84) Designated Contracting States: **CH DE FR GB IT LI**

(71) Applicant: **Katayama, Ichiro, No. 23-1, 2-chome, Chuo, Ohta-ku Tokyo (JP)**

(72) Inventor: **Katayama, Ichiro, No. 23-1, 2-chome, Chuo, Ohta-ku Tokyo (JP)**

(74) Representative: **Evans, David Charles et al, F.J. CLEVELAND & COMPANY 40-43, Chancery Lane, London, WC2A 1JQ (GB)**

(54) **Bearing unit for sliding device.**

(57) The present invention provides a bearing unit which comprises a bearing unit body mounted on a sliding unit, a plurality of guiding surfaces including a guiding surface being formed on said bearing unit body so as not being intersected each other, and a plurality of roller units having a plurality of rolls endlessly connected to each of the rolls and being provided on said guiding surfaces such that said rolls of the roller units are rotatably contacted with the guiding surfaces and each of said roller units are not contacted with other roller unit. The invention further provides a sliding device which employs effectively the above described bearing unit to perform the high performance sliding operation.

EP 0 138 360 A2

ACTORUM AG

## BEARING UNIT FOR SLIDING DEVICE

## DESCRIPTION

The present invention relates to a sliding device for use with a machine tool, a measuring device or the like, and more particularly to an improvement of a bearing unit which is used in the sliding device.

In the prior art sliding device, there is provided a ball bearing unit for linear motion wherein said slide unit is mounted on a track rail of rectangular cross section which is provided with linear track surfaces symmetrically at both vertical side surfaces. The slide unit is provided with track surfaces opposing said track surfaces on said track rail and has linear return holes running parallel to said track surfaces, and direction changing paths which connect correspondingly ends of said track surfaces and return holes respectively, and is further formed with circulating paths of circular cross sections where groups of balls endlessly circulate and support a load and rolling between both track surfaces on the slide unit and the rail.

In thus prior art ball bearing unit, a load is supported by many numbers of balls which are rotatably inserted into the circulating paths having circular cross sections.

According to the prior art ball bearing unit, there will be friction between an inner surface of the circulating paths and the balls. Moreover, each of the balls contacts at a point contacting state with respect to the inner wall of the circulating path. Accordingly, in the event of damage or defect to the balls or ball circulating path the load carrying capacity of the slide unit is decreased and that the inner surface of the circulating path may well be subjected to permanent damage. Moreover, there is the possibility of the collision of the neighbouring balls, since the each of balls is rotatably provided in the circulating path individually and in the manufacture of the circulating path it is very difficult to obtain the high precision.

It is an object of the present invention to provide a sliding device having an improved bearing unit having an improved load bearing capacity.

It is a further object of the present invention to provide a bearing unit for enhancing a sliding performance and the durability as well as being easy to manufacture.

According to the present invention, there is provided a bearing unit for a sliding device in which a slider is adapted for translational movement a guide member or rail, wherein said slider comprises a bearing unit body mounted on said rail, guiding surface means including a plurality of guiding surfaces being formed on said bearing unit so as not to intersect with each other, and roller means including a plurality of roller units having a plurality of rolls endlessly connected and being provided on each of said guiding surface means such that said rolls of the roller units are rotatably contacted with said guiding surfaces and each of said roller units are not in contact with other roller units.

According to the present invention there is further provided a sliding device comprising a slide guiding member for guiding sliding motion and including a guiding surface, and a sliding unit slidable along said guiding member and said unit comprising body and a bearing unit mounted on said sliding unit body and located between said sliding body and said sliding unit body, wherein said bearing unit comprises a bearing unit body mounted on said sliding unit body, guiding surface means including a plurality of guiding surfaces being formed on said bearing unit body so as not being intersect each other and such that at least a portion of the guiding surfaces of the guiding surface means being opposed to said guiding surface of said sliding member, and roller means having a plurality of roller including a plurality of rolls endlessly connected to each of the rolls and being provided on said guiding surface means such that said rolls of the roller units are rotatably contacted with said guiding surfaces and each of said roller units are not contacted with other roller units.

Following is a description by way of example only and with reference to the accompanying drawings of methods of carrying the invention into effect.

In the drawings:-

Figure 1 is a perspective view of a sliding device of an embodiment according to the present invention.

Figure 2 is a vertical sectional front view of a sliding device of Figure 1.

Figure 3 is a sectional view of a bearing unit of the present invention taken along line III-III of Figure 2.

Figure 4 is a sectional view of the bearing unit of the present invention taken along line IV-IV of Figure 2.

Figure 5 is a plan view of a roller means employed in a bearing unit of the present invention.

Figure 6 is a vertical sectional view of a sliding device of the other embodiment according to the present invention.

Figure 7 is a plan view of roller means employed in

0138360

- 5 -

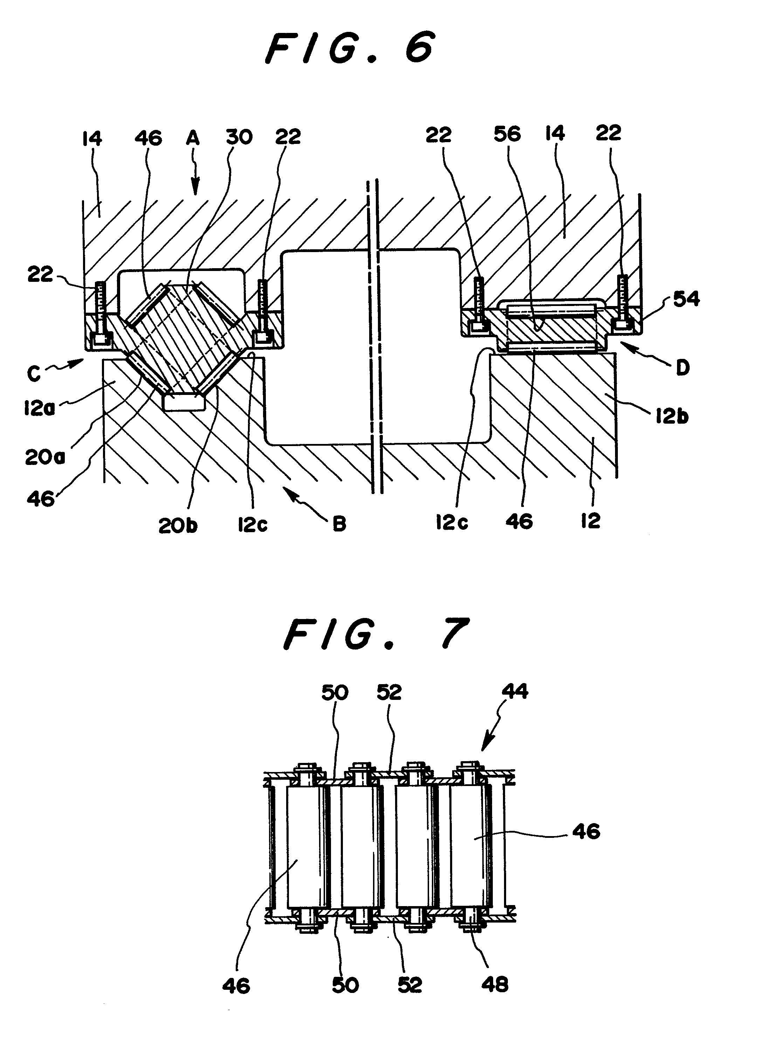

the sliding device of Figure 6.

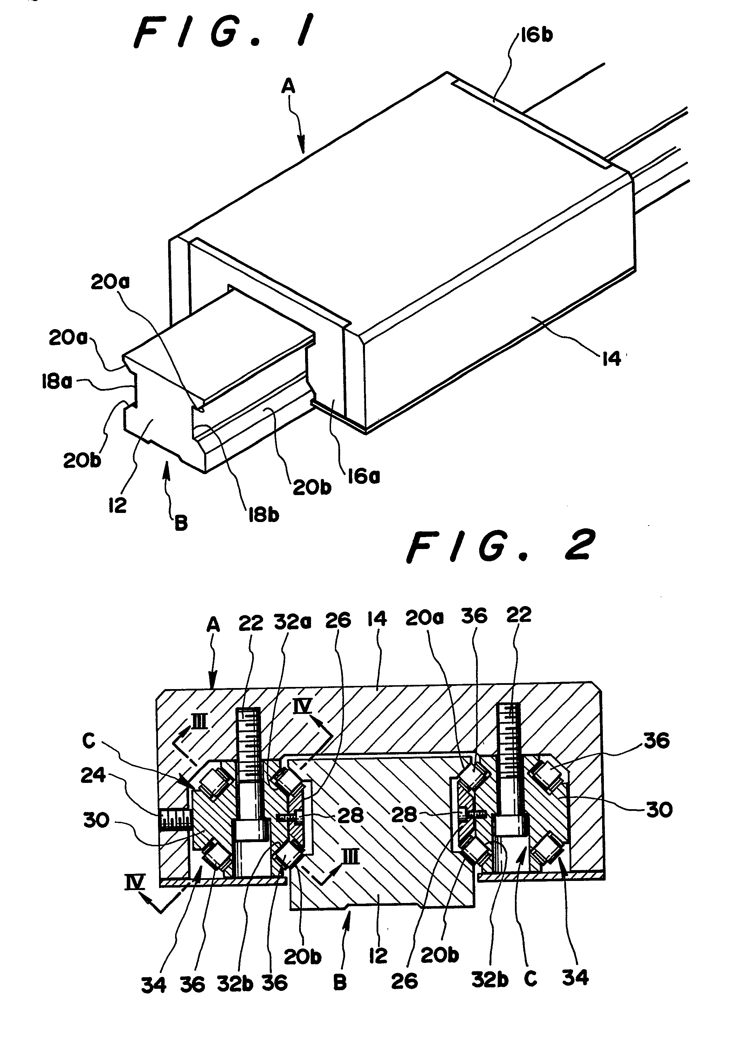

As is shown in Figure 1, the sliding device comprises, substantially, a sliding unit A and a track member B for guiding the sliding motion of the sliding unit A. The sliding unit A comprises a bearing unit C for aiding the sliding motion of the sliding unit A. The track member B includes a track rail 12 on which the sliding unit A is carried for sliding movement therealong by means of the bearing unit C.

In more detail, the sliding unit A comprises a channel shaped slide unit body 14 slidably mounted on the track rail 12 of the guiding member B having an end cover 16a, 16b at each end of the body 14. The track rail 12 is formed with a longitudinal recess 18a, 18b in each each longitudinal side wall thereof. Each recess 18a, 18b is provided with an inclined longitudinal upper guide surface 20a and an inclined longitudinal lower guide surface 20b as shown in Figure 2.

Body 14 of sliding unit A carries within the channel recess in the underside thereof, a pair of spaced bearing units C adapted to straddle the rail 12 each in juxtaposition with associated longitudinal recess 18a, 18b in the sides of rail 12.

Each bearing unit C is secured to sliding unit A for movement therewith by means of bolts 22. Each bearing unit C comprises a longitudinal body 30, extending the greater part of the length of sliding unit A; said body 30 being of generally square cross section and having in each corner a longitudinal recess 32 each of said recesses having a pair of side walls and a base wall. The longitudinal recesses 32 are arranged so that the base wall of each pair of diagonally opposed recess 32a, and 32b respectively are in spaced parallel relationship with one another and with the inclined guide surfaces 20a and 20b respectively of rail 12 as shown in Fiure 2. Each pair of diagonally opposed recesses 32a, 32b in body 30 accomodates a chain roller 34 capable of rolling/sliding movement within its recess relative both to the body 30 and the rail 12.

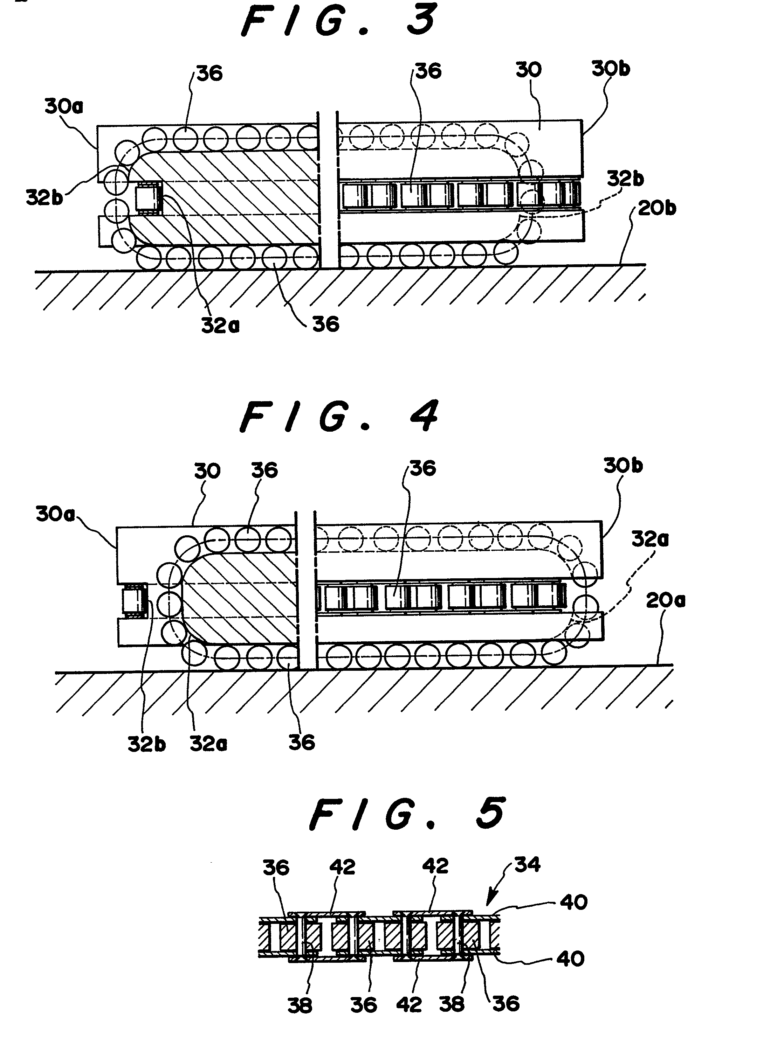

The pairs of recesses 32a and 32b are staggered longitudinally one with respect to the other as shown in Figures 3 and 4 to allow the chain rollers 34 to cross diagonally at each end of the body 30.

Thus in one end portion 30a of the body 30, the guiding slot 32a has a greater depth that that of the guiding slot 32b and in the other end portion 30b of the body 30, the guiding slot 32b has the greater depth than that of the guiding slot 32a.

The construction of the chain roller 34 is shown in Figure 5, from which it will be seen that the chain roller 34 is formed with a plurality of rolls 36 endlessly connected. Each of the rolls 36 is carried by a shaft 38 both ends of which are rotatably connected with an associated supporting plate 40, and each end portion of each roll 38 is rotatably connected by means of a retainer 40 to form an endless chain-roller.

The sliding units 14 are each adapted to carry a load. The pair of bearing units C, C are positioned one on each side of the track rail 12 of the track member B. The body 14 of the sliding unit A is supported on the track rail 12 by means of bearing units C as described above so as to be mutually slidable with each. The rolls 36 of the chain-roller 34 are rotatably contacted with the guiding surfaces 20a, 20b of the track rail 12 and plane bottom surfaces of the recesses 32a and 32b of the bearing body 30. The guiding surfaces 20a and 20b are provided in upper and lower side positions side surfaces of the track rail 12 along the longitudinal direction thereof so as to oppose the recesses 32a and 32b provided in body 30. The base wall of each of recesses 32a and 32b is formed by a flat plane, and the guiding surfaces 20a and 20b are also planar.

The sliding unit body 14 is slidably mounted on and carried by track rail 12 by way of the chain-rollers 34, such that each of the rolls 36 of the chain-roller 34 when juxtaposed rail surfaces 20a, 20b is in rolling, load-bearing contact with the base wall of recesses 32a, 32b respectively.

Figure 6 shows an another embodiment of a device according to the present invention. In this embodiment the rail 12 has a spaced pair of upstanding support portions 12a, 12b of dissimilar surface configuration. A first support portion 12a has a longitudinal recess 20 in the upper surface thereof, said recess being defined by inclined side walls 20a, 20b inclined at a substantial angle (approx 90 ) one with respect to the other to refine a recess 20 which reduces in cross section towards the bottom thereof. The second support portion 12b has a substantially planar upper surface 12c as shown in Figure 6.

Sliding unit A has a body portion 14 having first and second bearing carriage parts adapted to be associated with first and second rail support portions 12a and 12b respectively. The first bearing carriage part associated with rail support portion 12a comprises a pair of spaced, longitudinally extending flanges each having a plurality of longitudinally spaced bolt holes adapted to receive bolts for securing a carriage 30 thereto for movement with body portion 14.

Carriage 30 has a pair of upper and a pair of lower chain roller bearing surfaces; the lower bearing surfaces each being juxtaposed and in spaced parallel relationship with inclined side walls 20a and 20b respectively of recess 20. Each lower bearing surface is in spaced parallel relationship with its corresponding diagonal upper surface as shown in Figure 6 and is adapted to accomodate a roller chain 44. The arrangement is such that on translational movement of the Unit A on Rail B, each chain 44 via roller bearings 46 provides rolling, load bearing, contact therebetween and because of the inclination of the chains 44, Unit A is located positively on Rail B against lateral movement.

As before, the roller chain paths are staggered at each end of carriage 30 and as before in use, as the Unit A moves relative to Rail B, the individual rollers of each chain 44 precess about the chain path defined by the chain roller bearing surfaces of carriage 30 so that any load is carried by the rollers.

The second bearing carriage 54 has a pair of substantially horizontally disposed chain bearing surfaces 56 in spaced parallel relationship with surface 12c of second support portion 12b of rail 12. A single chain 46 is disposed about carriage 54 as shown in Figure 6.

Each of carriages 30 and 56 has laterally extending

0138360

- 10 -

flanges with bolt holes to accomodate securing bolts 22.

As is shown in Figure 7, the roller unit 44 comprises a plurality of rolls 46 each of which is rotatably supported by a shaft 48, a pair of supporting frames 50. Each of the shafts 48 is rotatably connected by retainers 52.

From the foregoing, it will be appreciated that a pair of guiding surfaces having a flat plane are provided on a bearing unit body so as to interlinkage with each and so as to be a two level crossing with each and chain roller is movably mounted on the guiding surfaces to form a bearing unit. Accordingly, rolls supporting a load are in line contact with the guiding surface and thereby durability of a bearing unit is increased to five to ten times comparing with that of a conventional bearing unit.

Thus, in use, each of rolls of a roller unit is rolls smoothly on its guiding surface when the sliding unit slides, and the collision of individual rolls one with another is completely avoided and friction significantly is reduced. Accordingly, it is possible to slide the sliding unit smoothly.

In addition, according to the present invention it is easy to manufacture such a sliding device with high precision and high durability.

0138360

- 11 -

## CLAIMS

1. A bearing unit for a sliding device comprising a carriage unit adapted to slide along a guide member characterised in that said unit comprises a bearing carriage, guiding surface means including a plurality of guiding surfaces being formed on said bearing carriage so as not being intersect each other, and roller means including a plurality of roller units having a plurality of rolls endlessly connected to other and being provided on said guiding surface means such that said rolls of the roller units are rotatably contacted with said guiding surfaces of the carriage and such that each of said roller units is not in contact with another roller unit.

2. A unit as claimed in claim 1, wherein said guiding surface means comprises a first guiding slot having a flat plane and endlessly provided on one pair of diagonally opposing edge portions of a bearing carriage and on both end portions of said bearing unit body, and a second guiding slot having a flat plane and endlessly provided on the other diagonally opposing edge portions and the both end portions of said bearing unit body, and wherein said roller means comprises a first roller unit having a plurality of rolls endlessly connected to each of the rolls and slidably arranged in said first guiding slot and a second roller unit having a plurality of rolls endlessly connected to each of the rolls and slidably arranged in said second guiding slot.

3. A unit as claimed in claim 2, wherein the depths of said first and second guiding slots offer at each end of the carriage so that the first and second roller units are staggered longitudinally one with respect to the other.

4. A unit as claimed in any preceding claim, wherein said guiding surface means comprises a first guiding slot having a flat plane end endlessly provided on one pair of opposing side surface portions and on both end portions of said bearing unit body, and a second guiding slot having a flat plane end endlessly provided on the other opposing side surface portions and the both end portions of said bearing unit body, and wherein said roller means comprises a first roller unit having a plurality of rolls endlessly connected to each of the rolls and slidably arranged in said first guiding slot and a second roller unit having a plurality of rolls endlessly connected to

- 13 -

each of the rolls and slidably arranged in said second guiding slot.

5. A unit as claimed in claim 4, wherein any one of he depths of said first and second guiding slots is greater than that of the other guiding slot at any one of end portions of said bearing unit body.

6. A sliding device comprising a slide guiding member for guiding sliding motion and including a guiding surface, and a unit for sliding along said side guiding member and including a sliding unit body and a bearing unit mounted on said sliding unit body and located between said guiding member and said sliding unit body, wherein said bearing unit comprising a bearing unit body mounted on said sliding unit body, guiding surface means including a plurality of guiding surfaces being formed on said bearing unit body so as not being intersected each other and such that at least a portion of the guiding surfaces of the guiding surface means being opposed to said guiding surface of said sliding member and, roller means having a plurality of roller including a plurality of rolls endlessly connected to each of the rolls and being provided on said guiding surface means such that said rolls of the roller units are rotatably connected with said guiding surfaces and each of said roller units are not connected with other roller units.

7. A sliding device as claimed in claim 6, wherein said sliding unit comprises first bearing unit which is positioned at one side of said slide guiding member and a second bearing unit which is positioned at other side of said slide guiding member, said guiding surface means comprises a flat plane surfaces of a first guiding slot provided on said first bearing unit and a flat plane surfaces of a second guiding slot provided on said second bearing unit.

8. A sliding device as claimed in claim 6, wherein said sliding unit comprises a first bearing unit having a bearing unit body, guiding surface means having a first guiding slot having a flat plane and endlessly provided on one pair of opposing side surface portions and on both end portions of bearing unit body, and a second guiding slot having a flat plane and endlessly provided on the other opposing side surface portions and the both end portions of said bearing unit body, and roller means comprising a first roller unit having a plurality of rolls endlessly connected to each of the rolls and rotatably arranged in said first guiding slot and a

- 15 -

second roller unit having a plurality of rolls endlessly connected to each of the rolls and rotatably arranged in said second guiding slot, and a second bearing unit including a third roller unit provided between a flat surface of said sliding unit body and a flat surface of said slide guiding member.

9. A sliding device as claimed in claim 6, wherein said guiding surface means comprises a first guiding slot having a flat plane and endlessly provided on one pair of diagonally opposing edge portions and on both end portions of said bearing unit body, and a second guiding slot having a flat plane and endlessly povided on the other diagonally opposing edge portions and the both end portions of said bearing unit body, and wherein said roller means comprises a first roller unit having a plurality of rolls endlessly connected to each of the rolls and slidably arranged in said first guiding slot and a second roller unit having a plurality of rolls endless connected to each of the rolls and slidably arranged in said second guiding slot.

10. A sliding device as claimed in claim 9, wherein any one of the depths of said first and second guiding slots are greater than that of the other guiding slot at any one of end portions of said bearing unit body.

11. A sliding device as claimed in claim 6, wherein said guiding surface means comprises a first guiding slot having a flat plane and endlessly provided on one pair of opposing side surface portions and on both end portions of said bearing unit body, and a second guiding slot having a flat plane and endlessly provided on the other opposing side surface portions and the both end portions of said bearing unit body, and wherein roller means comprises a first roller unit having a plurality of rolls endlessly connected to each of the rolls and slidably arranged in said second guiding slot.

12. A sliding device as claimed in claim 11, wherein any one of the depths of said first and second guiding slots is greater than that of the other guiding slot at any one of end portions of said bearing unit body.

FIG. 1

FIG. 2

F I G. 3

F I G. 4

F I G. 5

# FIG. 6

# FIG. 7